# EUROPÄISCHE PATENTSCHRIFT

(11) **EP 2 637 173 B1**
(45) Veröffentlichungstag und Bekanntmachung des Hinweises auf die Patenterteilung: **09.12.2020**
(21) Anmeldenummer: 13170311.8
(22) Anmeldetag: 21.10.2010
(51) Int. Cl.: G11C 11/00, G11C 16/22, G06F 21/00, G06F 12/14

(54) **Speichermodul zur gleichzeitigen Bereitstellung wenigstens eines sicheren und wenigstens eines unsicheren Speicherbereichs**
Memory module for simultaneously providing at least one secure and at least one non-secure memory area
Module de stockage pour mettre à disposition simultanément au moins une zone de stockage sûre et au moins une zone de stockage non sûre

(30) Priorität: 27.04.2010 DE 102010028231
(43) Veröffentlichungstag der Anmeldung: 11.09.2013
(62) Teilanmeldung aus: 10774169.6
(73) Patentinhaber: Robert Bosch GmbH, 70442 Stuttgart (DE)
(72) Erfinder: Ihle, Markus, 71282 Hemmingen (DE); Aue, Axel, 70825 Korntal-Muenchingen (DE); Szerwinski, Robert, 73732 Esslingen (DE); Bubeck, Oliver, 73655 Pluederhausen (DE); Hayek, Jan, 81827 Muenchen (DE); Shokrollahi, Jamshid, 71640 Ludwigsburg (DE)

(56) Entgegenhaltungen:
- EP-A1- 1 067 557
- WO-A2-02/01368
- US-A- 5 732 017
- US-A- 6 094 724
- US-A1- 2002 184 046
- US-A1- 2006 149 917
- US-A1- 2007 150 754
- US-A1- 2007 199 046
- US-A1- 2008 052 534
- US-A1- 2009 296 479

## Beschreibung

Die vorliegende Erfindung betrifft ein Speichermodul zur gleichzeitigen Bereitstellung wenigstens eines sicheren und wenigstens eines unsicheren Speicherbereichs sowie einen Mikrocontroller mit einem solchen Speichermodul.

### Stand der Technik

Die vorliegende Erfindung betrifft das Gebiet von sog. sicheren Mikrocontrollern (secure microcontroller), insbesondere im Automotive-Bereich. Bei den meisten Anwendungen in sicherheitsrelevanten Bereichen ist das unmanipulierbare oder das nicht-einsehbare Abspeichern von Daten eine wesentliche Grundanforderung. Schlüssel für symmetrische Verfahren oder private Schlüssel von asymmetrischen Verfahren sind Geheimnisse und müssen somit vor Angreifern geheim gehalten werden. Andere Anwendungsfälle erfordern zumindest einen Schutz vor Veränderung, z.B. das Abspeichern von Seriennummern oder Kilometerständen, das Unterbinden von Chiptuning usw.

Es ist deshalb üblich, sichere Umgebungen für die Ausführung von Funktionen, die diese Geheimnisse einsehen und/oder verändern müssen, bereitzustellen. Diese Umgebungen umfassen in der Regel eine "secure CPU" (sichere CPU) sowie ein separates Speichermodul für das sichere nicht-flüchtige Speichern von Daten, auch als "Secure NVM" (NVM = Non Volatile Memory) bezeichnet, das nur über die "secure CPU" angesprochen werden kann.

Es ist angedacht, zur Bereitstellung von sicheren Funktionen Mikrocontroller zu verwenden, die neben den üblichen Mikrocontroller-Komponenten, wie CPU, Speichermodule, Bus, I/O-Schnittstellen usw., auch eine sichere CPU sowie ein sicheres Speichermodul umfassen. Das Bereitstellen der sicheren Umgebung in einem Mikrocontroller ist jedoch relativ aufwändig, was insbesondere auf die Technologie der heute üblicherweise verwendeten nicht-flüchtigen Speicher zurückzuführen ist. Das sichere Speichermodul ist normalerweise als Flash-Modul ausgebildet und umfasst - wie alle Flash-Speichermodule - die eigentlichen Speicherzellen (Transistoren), eine Schreib-/Leseelektronik zum Betreiben des Speichers (z.B. State Machine, Adresspuffer, Datenpuffer, Zeilendecoder, Spaltendecoder usw.), eine Schnittstelleneinheit zur Anbindung der Schreib-/Leseelektronik an den internen Mikrocontroller-Bus sowie einen Analogschaltungsteil zur Spannungsversorgung und/oder -verstärkung u.ä. Insbesondere dieser Analogschaltungsteil, der üblicherweise (z.B. Flash, EEPROM) eine Ladungspumpe (charge pump) und eine Verstärkerbank umfasst, benötigt sehr viel Chipfläche und führt zu maßgeblichen Kosten des Moduls.

Es ist deshalb wünschenswert, in sicheren Mikrocontrollern möglichst nur ein Speichermodul zur Aufnahme sicherer sowie unsicherer Daten einsetzen zu müssen. Bei den im Stand der Technik eingesetzten Speichermodulen kann jedoch der auf einen solchen Speicher zugreifende Teilnehmer (üblicherweise eine CPU) den gesamten Datenbereich einsehen und modifizieren, so dass jeweils ein Speichermodul für sichere Daten und unsichere Daten eingesetzt wird.

Die WO 02/01368 A2 offenbart eine Sicherheitsvorrichtung für den kontrollierten, autorisierten Zugang auf beschränkt zugängliche Ressourcen. Eine Sicherheitsprozessor verfügt hierbei über Sicherheitsfunktionen und ist mit einem ersten veränderbaren nicht-flüchtigen Speicher und mit einer externen Schnittstelle verbunden ist. Aus der US 5,732,017 A ist eine nichtflüchtige Speichervorrichtung bekannt mit zwei Speicherbereichen, z.B. einem Flash-Speicher als permanenter Programmspeicher und einem E²PROM als häufiger aktualisierte Datenspeicher.

Die US 2008/0052534 offenbart eine integrierte Schaltung mit einem SDRAM-Speicher mit sicheren Bereichen und anderen Bereichen, wobei mehrere Teilnehmer auf den Speicher zugreifen können, wobei eine Busmasteridentifikationseinheit in der Lage ist, eine Identifikation des "bus masters", also des zugreifenden Teilnehmers, durchzuführen.

Die US 2009/296479 offenbart ein Speichermodul mit zwei Speicherbereichen, von denen der eine ein ferroelektrischer Speicher und der andere ein Flash-Speicher ist, die eine gemeinsame Ladungspumpe aufweisen.

### Offenbarung der Erfindung

Erfindungsgemäß wird ein Mikrocontroller mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Die Erfindung basiert auf der Idee, die gleichzeitige Bereitstellung von sicheren und nicht-sicheren bzw. unsicheren Speicherbereichen in einem Speichermodul besonders einfach zu machen, wenn dabei nur die für die Bereitstellung der Sicherheitsfunktionalität notwendigen Elemente mehrfach und alle anderen Elemente möglichst nur einfach ausgebildet werden. Insbesondere kann ein Speichermodul gleichzeitig sichere und unsichere Speicherbereiche bereitstellen, wenn für jeden Speicherbereich eine eigene Schreib-/Leseelektronikeinheit vorgesehen ist, wobei jedoch für alle Schreib-/Leseelektronikeinheiten nur ein Analogschaltungsteil, wie z.B. eine Spannungsversorgungsschaltung, in dem Speichermodul vorgesehen ist. Die Erfindung beschreibt ein erweitertes Speichermodul, das die gemeinsame Nutzung eines großen Speichers für mehrere Teilnehmer ermöglicht. Es erlaubt den Teilnehmern, jeweils für sich exklusive Teile zu nutzen, wodurch die Sicherheit der geheimen und/oder unmanipulierbaren Daten gewährleistet bleibt. Vorteilhaft kann ein erfindungsgemäßes Speichermodul als ein einzelnes sog. Hard Macro auf dem Chip definiert werden.

Vorteilhafterweise wird nur eine Schnittstelleneinheit zur Anbindung der Schreib-/Leseelektronikeinheiten vorgesehen. Im Ergebnis werden somit mehrere Speicherbereiche mit eigenen Schreib-/Leseelektronikeinheiten in einem einzigen Speichermodul bereitgestellt, wobei jedoch besonders vorteilhaft auf überzählige Schnittstelleneinheiten verzichtet wird.

Gemäß einer vorteilhaften Ausgestaltung der Erfindung ist das Speichermodul als Flash-Speichermodul ausgebildet, wobei dann zur Versorgung der vorgesehenen Anzahl von Speicherbereichen und Schreib-/Leseeinheiten nur eine Ladungspumpe und/oder eine Verstärkerbank (Schreib-/Leseverstärker-Bank) vorgesehen ist. Insbesondere bei Flash-Speicher entfaltet die Erfindung besondere Vorteile, da hier die Spannungsversorgungsschaltung als Bestandteil des Analogschaltungsteils besonders aufwändig ist.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen
Figur 1 zeigt schematisch den Aufbau eines sicheren Microcontrollers, der nicht vom Schutzbereich der Erfindung umfasst ist,
Figur 2 zeigt schematisch den Aufbau eines Microcontrollers umfassend ein Speichermodul gemäß einer bevorzugten Ausführungsform der Erfindung.

### Ausführungsform(en) der Erfindung

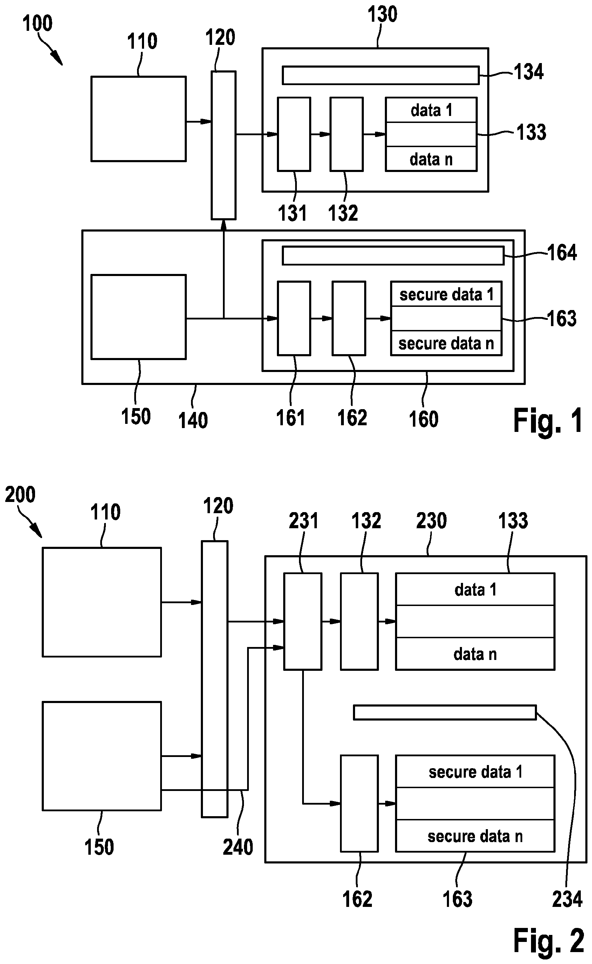

In den Figuren 1 und 2 sind jeweils nur die für die Erfindung relevanten Komponenten eines Mikrocontrollers dargestellt, wobei gleiche Elemente mit gleichen Bezugszeichen versehen sind.

In Figur 1 ist ein sicherer Mikrocontroller schematisch dargestellt und insgesamt mit 100 bezeichnet. Der Mikrocontroller 100 umfasst eine Haupt-Recheneinheit bzw. Haupt-CPU 110, die an einem mikrocontrollerinternen Bus 120 angebunden ist. Mit dem Bus 120 steht ebenfalls ein erstes Speichermodul 130 in Verbindung, das zur nicht-sicheren Aufnahme von Daten vorgesehen ist.

In dem Mikrocontroller 100 wird weiterhin eine sichere Umgebung 140 durch eine sichere CPU 150 sowie ein sicheres Speichermodul 160 bereitgestellt. Zur Ausführung sicherer Funktionen wird die sichere CPU 150 über den Bus 120 angesprochen und greift dann, falls nötig, auf das sichere Speichermodul 160 zu.

Die Speichermodule 130 und 160 sind im Wesentlichen gleich aufgebaut und verfügen jeweils über eine Schnittstelleneinheit 131 bzw. 161 zur Anbindung des Speichermoduls an den mikrocontrollerinternen Bus 120, eine Schreib-/Leseelektronikeinheit 132 bzw. 162 sowie die eigentlichen Speicherbereiche 133 bzw. 163. Die Speichermodule 130 und 160 umfassen zweckmäßigerweise Flash-Speicher, so dass die Speicherbereiche 133 und 163 eine Anzahl von Floating-Gate-Transistoren als Speicherzellen umfassen. Weiterhin umfassen die Speichermodule 130 und 160 jeweils einen Analogschaltungsteil 134 bzw. 164, die im beschriebenen Beispiel eines Flash-Speichers zumindest eine Spannungsversorgungsschaltung mit einer Ladungspumpe sowie eine Schreib-/Leseverstärkerbank umfassen. Die Schreib-/Leseelektronikeinheiten 132 und 162 umfassen jeweils z.B. eine State Machine, Adresspuffer, Datenpuffer, Zeilendecoder, Spaltendecoder usw. Die Speichermodule 130 und 160 sind separate Module und somit jeweils als ein eigenes Hard Macro auf der Chipfläche definiert.

In Figur 2 ist ein Mikrocontroller 200 schematisch dargestellt. Der Mikrocontroller 200 umfasst ebenfalls eine Anzahl von Komponenten, von denen wiederum nur die für die Erfindung relevanten abgebildet sind. Dabei sind Komponenten, die bereits in Figur 1 gezeigt sind, mit gleichen Bezugszeichen versehen.

Der Mikrocontroller 200 umfasst ein Speichermodul 230 gemäß einer bevorzugten Ausführungsform der Erfindung. Das Speichermodul 230 ist zur gleichzeitigen Bereitstellung eines unsicheren Speicherbereichs 133 sowie eines sicheren Speicherbereichs 163 ausgebildet. Die Speicherbereiche 133 und 163 sind jeweils mit einer zugehörigen Schreib-/Leseelektronikeinheit 132 bzw. 162 versehen. Die Schreib-/Leseelektronikeinheiten 132 und 162 umfassen jeweils z.B. eine State Machine, Adresspuffer, Datenpuffer, Zeilendecoder, Spaltendecoder usw., d.h. im Wesentlich die Elemente, die zum Bereitstellen sicher getrennter Speicherbereiche notwendig sind.

Vorteilhafterweise verfügt das Speichermodul 230 jedoch nur über einen einzigen Analogschaltungsteil 234, der im Falle von Flash-Speicher insbesondere eine Spannungsversorgungsschaltung mit Ladungspumpe und/oder eine Schreib-/Leseverstärkerbank umfasst, und der zur Versorgung aller Elemente des Speichermoduls 230 dient.

Gemäß der dargestellten bevorzugten Ausführungsform werden die Schreib-/Leseelektronikeinheiten 132 und 162 über eine einzige Schnittstelleneinheit 231 nach außen angebunden, im vorliegenden Fall an den mikrocontrollerinternen Bus 120.

Vorteilhafterweise kann das Speichermodul 230 zur gleichzeitigen Bereitstellung von sicheren und unsicheren bzw. nicht-sicheren Speicherbereichen als ein Hard Macro auf der Chipfläche definiert werden.

Gemäß Figur 2 ist die sichere CPU 150 über eine Identifikationsverbindung 240 mit dem sicheren Speichermodul 230 bzw. dessen Schnittstelleneinheit 231 verbunden. Durch Hinzufügen einer entsprechenden Schaltungslogik in die Schnittstelleneinheit 231 kann der Zugriff von Teilnehmern auf die unterschiedlichen Speicherbereiche 133 und 163 eingeschränkt werden, wenn der den Zugriff ausübende Teilnehmer eindeutig identifizierbar ist. Die eindeutige Identifikation kann beispielsweise durch die Identifikationsverbindung 240 erfolgen. Erfindungsgemäß findet die Identifikation jedoch über den Bus 120 statt, wozu beispielsweise bekannte Signale, wie z.B. ein Master-Interface-Identifier, verwendet werden kann.

Obwohl im vorliegenden Beispiel nur zwei Teilnehmer, d.h. die CPUs 110 und 150, auf nur zwei Speicherbereiche, d.h. die Speicherbereiche 133 und 163, in dem sicheren Speichermodul 230 zugreifen, ist die Erfindung nicht auf diese Ausführungsform beschränkt. Vielmehr sind unabhängig voneinander beliebig viele Teilnehmer und beliebig viele Speicherbereiche bereitstellbar.

## Patentansprüche

1. Microcontroller (200) umfassend ein Speichermodul (230) zur gleichzeitigen Bereitstellung wenigstens eines sicheren (163) und wenigstens eines unsicheren (133) Speicherbereichs, wobei das Speichermodul (230) eine eigene Schreib-/Leseelektronikeinheit (132, 162) für jeden der Speicherbereiche (133, 163) und wenigstens einen gemeinsamen Analogschaltungsteil (234) für mehrere Schreib-/Leseelektronikeinheiten (132, 162) und/oder mehrere Speicherbereiche (133, 163) umfasst und wobei das Speichermodul (230) wenigstens eine gemeinsame Schnittstelleneinheit (231) zur Anbindung von wenigstens zwei Schreib-/Leseelektronikeinheiten (132, 162) umfasst, sowie umfassend wenigstens eine Haupt-CPU (110) sowie wenigstens eine sichere CPU (150), die jeweils mit dem Speichermodul (230) verbunden sind und auf dieses zum Schreiben und/oder Lesen von unsicheren bzw. sicheren Daten zugreifen, wobei die wenigstens eine Haupt-CPU (110) sowie die wenigstens eine sichere CPU (150) jeweils über eine mikrocontrollerinterne Busverbindung (120) mit der Schnittstelleneinheit (231) des Speichermoduls (230) verbunden sind und wobei der Microcontroller eingerichtet ist, eine Identifikation eines ersten zugreifenden Teilnehmers über die Busverbindung 8120) zwischen der sicheren CPU (150) und dem Speichermodul (230) durchzuführen, **dadurch gekennzeichnet, dass** das Speichermodul (230) genau einen Analogschaltungsteil (234) für alle Schreib-/Leseelektronikeinheiten (132, 162) und/oder alle Speicherbereiche (133, 163) umfasst, wobei der Analogschaltungsteil (234) eine Spannungsversorgungsschaltung zur Versorgung der Schreib-/Leseelektronikeinheiten (132, 162) und/oder Speicherbereiche (133, 163) umfasst, wobei die Speicherbereiche (133, 163) als Flash-Speicherbereiche ausgebildet sind und der Analogschaltungsteil (234) eine Ladungspumpe umfasst.

2. Microcontroller (200) nach Anspruch 1, welcher eingerichtet ist, einen Zugriff von weiteren Teilnehmern auf den sicheren Speicherbereich (163) einzuschränken, wenn der erste zugreifende Teilnehmer identifiziert ist.

3. Microcontroller (200) nach einem der vorangegangenen Ansprüche, wobei das Speichermodul (230) genau eine Schnittstelleneinheit (231) zur Anbindung aller Schreib-/Leseelektronikeinheiten (132, 162) umfasst.

## Claims

1. Microcontroller (200) comprising a memory module (230) for simultaneously providing at least one secure memory area (163) and at least one insecure memory area (133), wherein the memory module (230) comprises a separate write/read electronic unit (132, 162) for each of the memory areas (133, 163) and at least one common analogue circuit part (234) for a plurality of write/read electronic units (132, 162) and/or a plurality of memory areas (133, 163), and wherein the memory module (230) comprises at least one common interface unit (231) for connecting at least two write/read electronic units (132, 162), and comprising at least one main CPU (110) and at least one secure CPU (150) which are each connected to the memory module (230) and access the latter in order to write and/or read insecure or secure data, wherein the at least one main CPU (110) and the at least one secure CPU (150) are each connected to the interface unit (231) of the memory module (230) via a bus connection (120) inside the microcontroller, and wherein the microcontroller is configured to identify a first accessing subscriber via the bus connection (120) between the secure CPU (150) and the memory module (230), **characterized in that** the memory module (230) comprises precisely one analogue circuit part (234) for all write/read electronic units (132, 162) and/or all memory areas (133, 163), wherein the analogue circuit part (234) comprises a voltage supply circuit for supplying the write/read electronic units (132, 162) and/or memory areas (133, 163), wherein the memory areas (133, 163) are in the form of flash memory areas, and the analogue circuit part (234) comprises a charge pump.

2. Microcontroller (200) according to Claim 1, which is configured to restrict access of further subscribers to the secure memory area (163) if the first accessing subscriber has been identified.

3. Microcontroller (200) according to one of the preceding claims, wherein the memory module (230) comprises precisely one interface unit (231) for connecting all write/read electronic units (132, 162) .

## Revendications

1. Microcontrôleur (200), comprenant un module de mémoire (230) destiné à fournir simultanément au moins une zone de mémoire sécurisée (163) et au moins une zone de mémoire non sécurisée (133), dans lequel le module de mémoire (230) comprend une unité électronique d'écriture/lecture (132, 162) qui lui est propre pour chacune des zones de mémoire (133, 163) et au moins une partie de circuit analogique commune (234) pour plusieurs unités électroniques d'écriture/lecture (132, 162) et/ou plusieurs zones de mémoire (133, 163), et le module de mémoire (230) comprenant au moins une unité d'interface commune (231) pour rattacher au moins deux unités électroniques d'écriture/lecture (132, 162), et comprenant au moins une CPU principale (110) et au moins une CPU sécurisée (150) qui sont respectivement connectées au module de mémoire (230) et ont accès à ce dernier pour écrire et/ou lire des données non sécurisées ou sécurisées, dans lequel ladite au moins une CPU principale (110) ainsi que ladite au moins une CPU sécurisée (150) sont respectivement connectées à l'unité d'interface (231) du module de mémoire (230) par une connexion de bus (120) interne au microcontrôleur, et le microcontrôleur étant conçu pour effectuer une identification d'un premier abonné accédant au dispositif par l'intermédiaire de la connexion de bus 8120) entre la CPU sécurisée (150) et le module de mémoire (230), **caractérisé en ce que** le module de mémoire (230) comprend exactement une partie de circuit analogique (234) pour toutes les unités électroniques d'écriture/lecture (132, 162) et/ou toutes les zones de mémoire (133, 163), la partie de circuit analogique (234) comprenant un circuit d'alimentation en tension pour alimenter les unités électroniques d'écriture/lecture (132, 162) et/ou les zones de mémoire (133, 163), les zones de mémoire (133, 163) étant réalisées comme des zones de mémoire flash et la partie de circuit analogique (234) comprenant une pompe de charge.

2. Microcontrôleur (200) selon la revendication 1, qui est conçu pour limiter un accès d'autres abonnés à la zone de mémoire sécurisée (163) si le premier abonné accédant au dispositif est identifié.

3. Microcontrôleur (200) selon l'une quelconque des revendications précédentes, dans lequel le module de mémoire (230) comprend exactement une unité d'interface (231) pour rattacher toutes les unités électroniques d'écriture/lecture (132, 162).
